# EUROPEAN PATENT SPECIFICATION

(11) **EP 4 474 095 B1**
(45) Date of publication and mention of the grant of the patent: **15.04.2026**
(21) Application number: 24180336.0
(22) Date of filing: 05.06.2024
(51) Int. Cl.: B23K 26/0622, B23K 26/08, B23K 26/384, B23K 26/382, B23K 26/402, B23K 101/00, B23K 103/16

(54) **LASER PERFORATING SYSTEM AND METHOD FOR LASER PERFORATING AN ACOUSTIC PANEL SKIN**
LASERPERFORIERSYSTEM UND VERFAHREN ZUR LASERPERFORATION EINER AKUSTIKPLATTENHAUT
SYSTÈME DE PERFORATION LASER ET PROCÉDÉ DE PERFORATION LASER D'UNE PEAU DE PANNEAU ACOUSTIQUE

(30) Priority: 05.06.2023 US 202318205906
(43) Date of publication of application: 11.12.2024
(73) Proprietor: Rohr, Inc., Chula Vista, CA 91910-2098 (US)
(72) Inventor: GHEBREMICHAEL, Fassil, Irvine, 92618 (US); LEMANSKI, Joseph R., Chula Vista, 91910 (US)
(74) Representative: Dehns

(56) References cited:
- EP-A1- 3 763 471
- US-A1- 2002 036 115
- US-A1- 2019 240 787

## Description

The present invention relates generally to laser perforation systems and methods and, more particularly, to a laser perforating system, and a method for forming a plurality of holes in a front skin for an acoustic panel, see claims 1 and 10.

### BACKGROUND

Acoustic attenuation panels are known for lining air flow surfaces of aircraft propulsion systems. Generally, acoustic liners may include a cellular core positioned between a perforated front skin and a back skin. Various systems and methods are known in the art for forming the perforated front skin. While these known systems and methods have various advantages, there is still room in the art for improvement.

EP 3 763 471 A1 (describing the preamble of claim 1) shows a prior art laser processing method.

US 2002/036115 A1 (describing the preamble of claim 10) shows a prior art noise attenuation panel.

### SUMMARY

According to a first aspect of the present invention, there is provided a laser perforating system as set forth in claim 1.

In any of the aspects or embodiments described above and herein, the instructions, when executed by the processor, may cause the processor to control the at least one laser source to form the hole in the skin by iteratively performing the steps of generating the SPW beam with the at least one laser source and directing the SPW beam to the skin at the hole location and generating the LPW beam with the at least one laser source and directing the LPW beam to the skin at the hole location.

In any of the aspects or embodiments described above and herein, the perimeter portion may surround the center portion.

In any of the aspects or embodiments described above and herein, the perimeter portion may include less than or equal to 30 percent of an area of the hole location and the center portion may include greater than or equal to 70 percent of the area of the hole location.

In any of the aspects or embodiments described above and herein, the instructions, when executed by the processor, may further cause the processor to control the at least one laser source to form the hole in the skin by generating the SPW beam with the at least one laser source and directing the SPW beam to the skin at the perimeter hole portion and the center hole portion to ablate a final portion of a skin material at the hole location.

In any of the aspects or embodiments described above and herein, the hole location may include an axial centerline for the hole. The instructions, when executed by the processor, may cause the processor to control the at least one laser source to reduce a laser power of the LPW beam as a radial distance of the LPW beam from the axial centerline increases.

In any of the aspects or embodiments described above and herein, the SPW beam and the LPW beam may have a light wavelength between 400 nanometers and 1100 nanometers.

In any of the aspects or embodiments described above and herein, the at least one laser source may include a first laser source. The first laser source may be configured to generate the SPW beam and the LPW beam.

In any of the aspects or embodiments described above and herein, the at least one laser source may include a first laser source and a second laser source. The first laser source may be configured to generate the SPW beam. The second laser source may be configured to generate the LPW beam.

According to a further aspect of the present invention, there is provided a method for forming a plurality of holes in a front skin for an acoustic panel as set forth in claim 10.

In any of the aspects or embodiments described above and herein, the first portion may include a first area, the second portion may include a second area, and the second area may be greater than the first area.

In any of the aspects or embodiments described above and herein, the acoustic panel may include the front skin, a back skin, and a core. Forming each hole of the plurality of hole may be performed with the core mounted to and between the front skin and the back skin.

In any of the aspects or embodiments described above and herein, forming each hole of the plurality of holes may further include generating the short pulse width (SPW) beam and directing the SPW beam to the front skin at the first portion and the second hole portion to ablate a final portion of a skin material of the front skin at the hole location.

In any of the aspects or embodiments described above and herein, the front skin may be formed by a skin material. The skin material may include a carbon fiber-reinforced plastic.

In any of the aspects or embodiments described above and herein, the SPW beam may have a first light wavelength within a green range of visible light and the LPW beam may have a second light wavelength within the green range of visible light.

The present invention, and all its aspects, embodiments and advantages associated therewith will become more readily apparent in view of the detailed description provided below, including the accompanying drawings.

### BRIEF DESCRIPTION OF THE DRAWINGS

FIG. 1 schematically illustrates a cutaway, side view of an aircraft propulsion system, in accordance with one or more embodiments of the present disclosure.
FIG. 2 illustrates a cutaway, perspective view of an acoustic panel, in accordance with one or more embodiments of the present disclosure.
FIG. 3 schematically illustrates laser perforating system, in accordance with one or more embodiments of the present disclosure.
FIG. 4 illustrates a graph of laser power vs. time for an exemplary laser pulse, in accordance with one or more embodiments of the present disclosure.
FIG. 5 illustrates a view of a fiber-reinforced plastic skin including a hole formed using a laser perforating process, in accordance with one or more embodiments of the present disclosure.
FIG. 6 illustrates a cutaway, side view of the fiber-reinforced plastic skin of FIG. 5 including the hole, in accordance with one or more embodiments of the present disclosure.
FIG. 7 illustrates flow chart depicting a method for forming holes for an acoustic panel front skin using a laser perforating system, in accordance with one or more embodiments of the present disclosure.
FIGS. 8A-C illustrate a series of sequential formation stages of a hole for an acoustic panel front skin using a laser perforating system, in accordance with one or more embodiments of the present disclosure.
FIGS. 9A-C illustrate another series of sequential formation stages of a hole for an acoustic panel front skin using a laser perforating system, in accordance with one or more embodiments of the present disclosure.
FIG. 10 illustrates a graph of laser power vs. hole radial position for a laser beam generated by a laser perforating system, in accordance with one or more embodiments of the present disclosure.
FIG. 11 illustrates a cutaway, side view of another fiber-reinforced plastic skin including a partially-formed hole, in accordance with one or more embodiments of the present disclosure.

### DETAILED DESCRIPTION

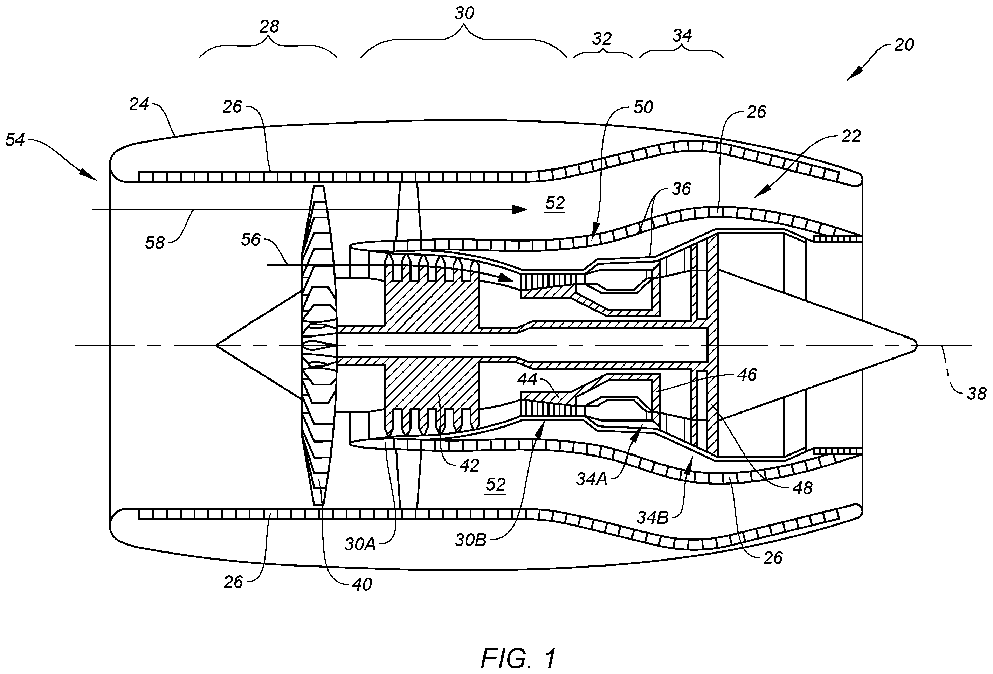

FIG. 1 illustrates a propulsion system 20 for an aircraft. Briefly, the aircraft may be a fixed-wing aircraft (e.g., an airplane), a rotary-wing aircraft (e.g., a helicopter), a tilt-rotor aircraft, a tilt-wing aircraft, or another aerial vehicle. Moreover, the aircraft may be a manned aerial vehicle or an unmanned aerial vehicle (UAV, e.g., a drone). However, the present disclosure is not limited to any particular application of the propulsion system 20. The propulsion system 20 of FIG. 1 includes a gas turbine engine 22, a nacelle 24, and one or more acoustic panel 26.

The gas turbine engine 22 of FIG. 1 is configured as a multi-spool turbofan gas turbine engine. The gas turbine engine 22 of FIG. 1 includes a fan section 28, a compressor section 30, a combustor section 32, a turbine section 34, and an engine static structure 36. The gas turbine engine 22 sections 28, 30, 32, and 34, of FIG. 1 are arranged sequentially along an axial centerline 38 (e.g., a rotational axis) of the gas turbine engine 22. The compressor section 30 may include a low-pressure compressor (LPC) section 30A and a high-pressure compressor (HPC) section 30B. The turbine section 34 may include a high-pressure turbine (HPT) section 34A and a low-pressure turbine (LPT) section 34B. The present disclosure, however, is not limited to the particular gas turbine engine 22 configuration of FIG. 1. For example, aspects of the present disclosure may also be applicable to propulsion system gas turbine engines having single-spool and three-spool configurations.

Each of the gas turbine engine 22 sections 28, 28A, 28B, 32A, and 32B includes a bladed rotor 40, 42, 44, 46, 48. The fan rotor 40 and the LPC rotor 42 are connected to and driven by the LPT rotor 48 through a low-speed shaft. The HPC rotor 44 is connected to and driven by the HPT rotor 46 through a high-speed shaft. The shafts are concentrically disposed relative to the axial centerline 38 and configured for rotation about the axial centerline 38 relative to the engine static structure 36. The shafts are rotatably supported by a plurality of bearings assemblies (not shown). Each of these bearing assemblies is formed by or otherwise connected to the engine static structure 36.

The engine static structure 36 of FIG. 1 includes a core cowl 50. The core cowl 50 extends circumferentially about (e.g., completely around) the axial centerline 38. The core cowl 50 extends generally axially to surround and house the gas turbine engine 22 sections 30, 32, and 34. The core cowl 50 may form at least a portion of a bypass duct 52 radially outward of the core cowl 50 (e.g., radially between the core cowl 50 and the nacelle 24). The engine static structure 36 may additionally include one or more engine cases, bearing assemblies, and/or other structural components of the gas turbine engine 22 which house, structurally support, and/or rotationally support components of the engine sections 28, 30, 32, and 34.

The nacelle 24 of FIG. 1 extends circumferentially about (e.g., completely around) the axial centerline 38. The nacelle 24 extends generally axially to surround and house the gas turbine engine 22. The nacelle 24 may form at least a portion of the bypass duct 52 radially inward of the nacelle 24. The nacelle 24 forms an exterior housing of the propulsion system 20.

The acoustic panels 26 are disposed within various portions of the propulsion system 20 to attenuate noise associated with operation of the propulsion system 20. The propulsion system 20 of FIG. 1 includes the acoustic panels 26 disposed along the bypass duct 52. For example, the acoustic panels 26 may be disposed on the nacelle 24 and/or the core cowl 50 along all or a portion of an axial span of the bypass duct 52. The present disclosure, however, is not limited to any particular location for the acoustic panels 26 or to the use of the acoustic panels 26 with an aircraft propulsion system (e.g., the aircraft propulsion system 20).

During operation, air enters the propulsion system 20 through an air inlet 54 of the propulsion system 20. This air is directed through the fan section 28 into a core flow path 56 (e.g., an annular core flow path) and a bypass flow path 58 (e.g., an annular bypass flow path). The core flow path 56 extends axially along the axial centerline 38 within the propulsion system 20 and through the engine sections 30, 32, and 34. The bypass flow path 58 extends axially along the axial centerline 38 and through the bypass duct 52. The air within the core flow path 56 may be referred to as "core air." The air within the bypass flow path 58 may be referred to as "bypass air."

The core air is compressed by the LPC rotor 42 and the HPC rotor 44 and directed into a combustion chamber of a combustor (e.g., an annular combustor) in the combustor section 32. Fuel is injected into the combustion chamber through one or more fuel injectors and mixed with the compressed core air to provide a fuel-air mixture. This fuel-air mixture is ignited and combustion products thereof flow through and sequentially cause the HPT rotor 46 and the LPT rotor 48 to rotate. The rotation of the HPT rotor 46 and the LPT rotor 48 respectively drive rotation of the HPC rotor 44 and the LPC rotor 42 and, thus, compression of the air received from the air inlet 54. The rotation of the LPT rotor 48 also drives rotation of the fan rotor 40, which fan rotor 40 propels bypass air through and out of the bypass flow path 58.

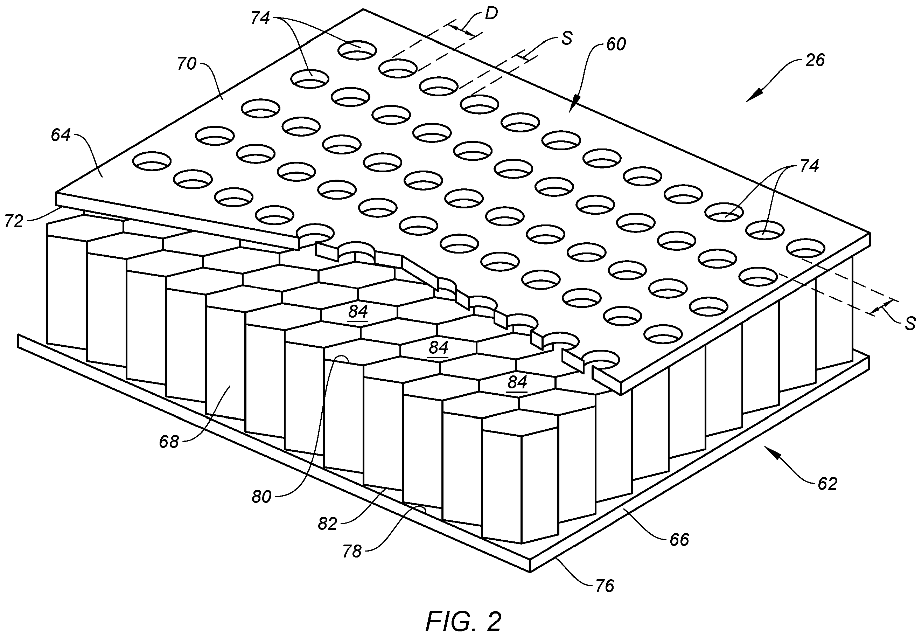

FIG. 2 illustrates a perspective, cutaway view of an exemplary configuration of the acoustic panel 26. The acoustic panel 26 of FIG. 2 extends between and to a first side 60 of the acoustic panel 26 and a second side 62 of the acoustic panel 26. The acoustic panel 26 of FIG. 2 includes a front skin 64, a back skin 66, and a core 68.

The front skin 64 is disposed at (e.g., on, adjacent, or proximate) the first side 60. The front skin 64 extends between and to an outer surface 70 of the front skin 64 and an inner surface 72 of the front skin 64. The outer surface 70 forms the first side 60. The inner surface 72 is disposed at (e.g., on, adjacent, or proximate) and/or mounted to the core 68. The front skin 64 forms a plurality of holes 74 extending through the front skin 64. Each of the holes 74 extends through the front skin 64 from the outer surface 70 to the inner surface 72. The holes 74 may be characterized by a hole pattern including a diameter D and a spacing S. The diameter D may be representative of an average diameter for the holes 74. The spacing S may be representative of an average spacing between adjacent holes 74. The diameter D and the spacing S may be in a range of approximately 1 millimeter (mm) to approximately 10 mm. However, the present disclosure is not limited to any particular diameter D or spacing S for the holes 74.

The back skin 66 is disposed at (e.g., on, adjacent, or proximate) the second side 62. The back skin 66 extends between and to an outer surface 76 of the back skin 66 and an inner surface 78 of the back skin 66. The outer surface 76 forms the second side 62. The outer surface 76 may be disposed at (e.g., on, adjacent, or proximate) and/or mounted to a structure of the propulsion system 20 (see FIG. 1), as previously discussed. For example, the outer surface 76 may be mounted to the nacelle 24 or the core cowl 50. The inner surface 78 is disposed at (e.g., on, adjacent, or proximate) and/or mounted to the core 68. The back skin 66 may be an imperforate skin.

The core 68 extends between and to a first end 80 of the core 68 and a second end 82 of the core 68. The first end 80 is disposed at (e.g., on, adjacent, or proximate) and/or mounted to the front skin 64 (e.g., the inner surface 72). The second end is disposed at (e.g., on, adjacent, or proximate) and/or mounted to the back skin 66 (e.g., the inner surface 78). The core 68 forms a plurality of cells 84 extending through the core 68 from the first side 80 to the second side 82. For example, the core 68 may have a honeycomb structure forming each of the cells 84. However, the present disclosure is not limited to the use of a honeycomb structure for the core 68 to form the cells 84. The cells 84 form resonant cavities (e.g., Helmholtz resonant cavities) that contribute to the dissipation of incident acoustic energy by attenuating acoustic reflected waves and/or by converting acoustic energy into heat energy (e.g., by Helmholtz resonance).

The front skin 64 and the back skin 66 include a skin material which forms all or a substantial portion of the front skin 64 and the back skin 66. The skin material may be a fiber-reinforced plastic material including a polymer matrix material and a fiber-reinforcing material. The polymer matrix material may include, for example, a thermoplastic such as, but not limited to, polyether ether ketone (PEEK), polyether ketone ketone (PEKK), polyaryletherketone (PAEK), polyphenylene sulfide (PPS), polyetherimide (PEI), polypropylene (PP), or the like, including combinations thereof. The matrix material may alternatively include a thermoset resin. The fiber-reinforcing material may include a plurality of fibers such as, but not limited to carbon fibers, fiberglass fibers, aramid or para-aramid synthetic fibers, or the like embedded in the thermoplastic matrix material. The skin material for the back skin 66 may be the same as the skin material for the front skin 64. Alternatively, the skin material for the back skin 66 may be different than the skin material for the front skin 64. The core 68 includes a core material which forms all or a substantial portion of the core 68. The core material may be the same as the skin material for one or both of the front skin 64 and the back skin 66. Alternatively, the core material may be different than the back skin. For example, the core material may include a lightweight metal or metal alloy material such as, but not limited to, aluminum.

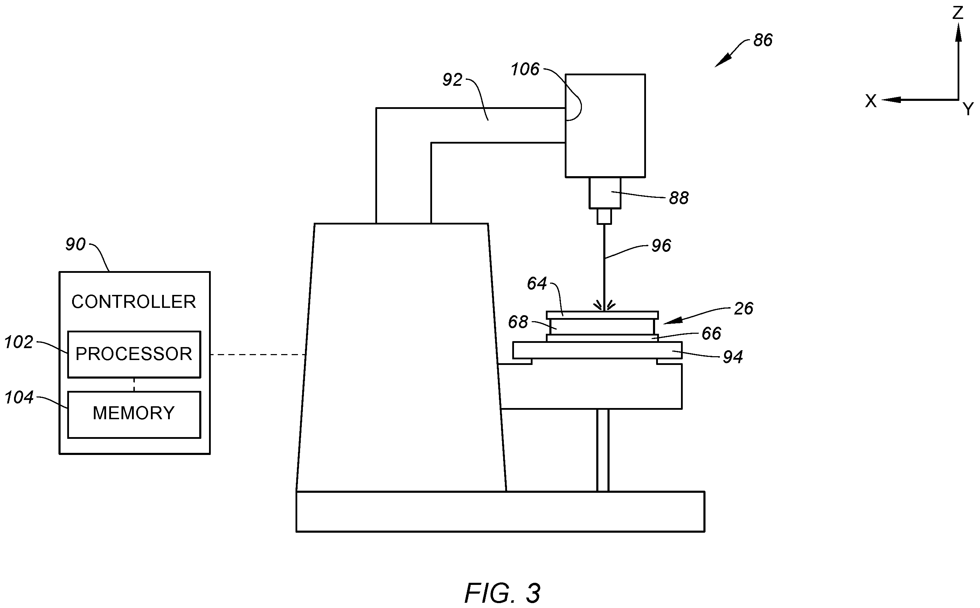

FIG. 3 schematically illustrates a laser perforating system 86. The laser perforating system 86 includes at least one laser source 88 and a controller 90. The laser perforating system 86 may additionally include a movable arm 92 and a support structure 94.

The laser source 88 is configured to generate a laser beam 96 for forming the holes 74 of the front skin 64 (e.g., perforating the front skin 64). In particular, the laser source 88 is configured to generate the laser beam 96 as a pulsed laser beam having a pulse width (sometimes referred to as a "pulse time"). The laser source 88 may be configured to vary the pulse width of the laser beam 96. For example, the laser source 88 may be configured to generate the laser beam 96 with a first pulse width and a second pulse width different than the first pulse width. Alternatively, the laser perforating system 86 may include a first laser source 88 configured to generate a first laser beam 96 having a first pulse width and a second laser source 88 configured to generate a second laser beam 96 having a second pulse width, different than the first pulse width. The laser source 88 may be configured to generate the laser beam 96 with a pulse width (e.g., the first pulse width and the second pulse width) between, for example, 150 femtoseconds and 500 nanoseconds. However, the present disclosure is not limited to any particular value of the pulse width for the laser source 88 and its generated laser beam 96. The laser source 88 may be configured to generate the laser beam 96 with a light wavelength between approximately 400 nanometers (nm) and approximately 1100 nm. The light wavelength may preferably be less than 570 nm, for example, between approximately 495 nm and approximately 570 nm (e.g., within a green range of visible light). The present disclosure, however, is not limited to any particular value of the light wavelength for the laser source 88 and its generated laser beam 96. Examples of a suitable laser source 88 include a Ytterbium (Yb) fiber laser source or a neodymium-doped yttrium aluminum garnet (Nd:YAG) laser source, and the present disclosure is not limited to any particular laser source 88 configuration.

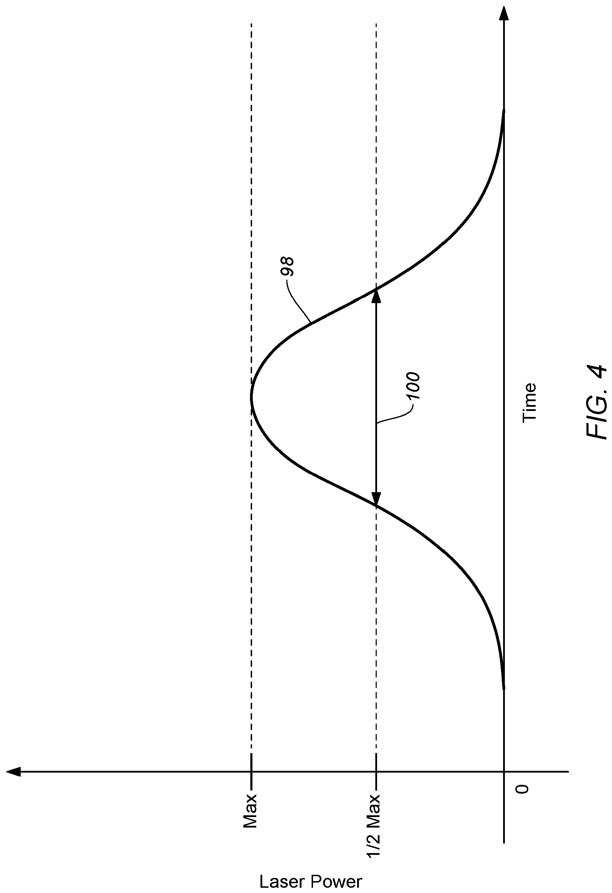

As used herein, the term "pulse width" refers to the pulse width for a pulsed laser beam (e.g., the laser beam 96). FIG. 4 illustrates an exemplary laser beam pulse 98 for the laser beam 96. In particular, FIG. 4 illustrates a graph of laser beam 96 power vs. time for the laser beam pulse 98. The laser beam pulse 98 of FIG. 4 has a full width at half maximum (FWHM) pulse width 100. In other words, the pulse width 100 of FIG. 4 has a full width at one half of a maximum laser beam power for the laser beam pulse 98.

The controller 90 includes a processor 102 connected in signal communication with memory 104. The processor 102 may include any type of computing device, computational circuit, processor(s), CPU, computer, field-programmable gate array (FPGA), or the like capable of executing a series of instructions that are stored in the memory 104. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The instructions stored in memory 104 may be in the form of G-code, M-code, or another suitable programming language which can be executed by the processor 102. The instructions stored in memory 104 may be generated by computer-aided design (CAD) or computer-aided manufacturing (CAM) software, whereby the physical dimensions of a particular workpiece may be translated into instructions for execution by the processor 102 controlling components of the laser perforating system 86. The executable instructions may apply to any functionality described herein to enable the laser perforating system 86 and its components to accomplish the same algorithmically and/or by coordination of the laser perforating system 86 components. The memory 104 may include a single memory device or a plurality of memory devices; e.g., a computer-readable storage device that can be read, written, or otherwise accessed by a general purpose or special purpose computing device, including any processing electronics and/or processing circuitry capable of executing instructions. The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly or indirectly coupled to the controller 90. The controller 90 may include, or may be in communication with, an input device that enables a user to enter data and/or instructions, and may include, or be in communication with, an output device configured, for example to display information (e.g., a visual display or a printer), or to transfer data, etc. Communications between the controller 90 and other electrical and/or electronic components (e.g., controllers, sensors, etc.) may be via a hardwire connection or via a wireless connection. A person of skill in the art will recognize that portions of the controller 90 may assume various forms (e.g., digital signal processor, analog device, etc.) capable of performing the functions described herein.

The laser perforating system 86 may include the movable arm 92 to move the laser source 88 relative to the acoustic panel 26. For example, the laser source 88 may be mounted to a distal end 106 of the movable arm 92. The moveable arm 92 may be configured to translate and/or rotate the laser source 88 relative to an X-axis, a Y-axis, and/or a Z-axis. The laser perforating system 86 may include, for example, a multi-mirror scanner system to direct the laser energy to the work area for an X-axis, a Y-axis, and/or a Z-axis specific location. The laser perforating system 86 may include the support structure 94 to support and securely position the acoustic panel 26. The support structure 94 may include a jig and/or one or more tooling members to support and securely position the acoustic panel 26. The support structure 94 may be configured to move (e.g., translate and/or rotate) to position the acoustic panel 26 relative to the laser source 88.

As previously discussed, the body material for a perforated acoustic panel front skin may include a fiber-reinforced plastic material forming all or a substantial portion of the perforated acoustic panel front skin. For example, the perforated acoustic panel front skin may be formed from a carbon fiber-reinforced plastic (CFRP) material. The holes (e.g., the holes 74) of the perforated acoustic panel front skin may be formed using a laser perforating system to ablate the fiber-reinforced plastic material. However, formation of the holes using a laser perforating system may be difficult, at least in part, due to significant differences in thermal properties of the fiber-reinforcing material (e.g., carbon fiber) relative to the polymer matrix material. For example, the fiber-reinforcing material may have a vaporization temperature which is significantly higher than the vaporization temperature of the polymer matrix material. As a result, a laser power which is suitable for ablating the fiber-reinforcing material may cause damage to the polymer matrix material. A localized region of damaged fiber-reinforced plastic material may be referred to as a "heat affected zone" (HAZ). The HAZ may be identified as a length of fibers of the fiber-reinforcing material at (e.g., on, adjacent, or proximate) a fiber-reinforced plastic material surface which length is free of the polymer matrix material or for which length the polymer matrix material has been thermally damaged. The presence and size of the HAZ may negatively impact the structural characteristics (e.g., strength, fatigue resistance, distortion, surface cracking, etc.) of the fiber-reinforced plastic material within and in proximity to the HAZ. For a perforated acoustic panel front skin, in particular, the HAZ may cause rough and/or uneven portions of the fiber-reinforced plastic material which form the holes of the perforated acoustic panel front skin, thereby leading to non-optimal fluid (e.g., air) flow through the holes.

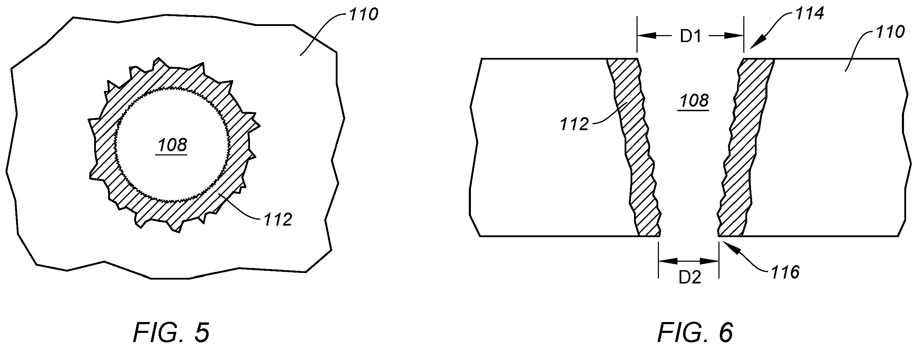

FIGS. 5 and 6 illustrate an exemplary hole 108 formed in a CFRP skin 110 using a laser perforation process. The hole 108 is surrounded by a HAZ 112 of the CFRP skin 110. FIG. 5 illustrates a view of an inlet 114 of the hole 108 at a surface of the CFRP skin 110. FIG. 6 illustrates a cutaway view of the hole 108 extending through the CFRP skin 110 from the inlet 114 to an outlet 116. The inlet 114 has an inlet diameter D1. The outlet 116 has an outlet diameter D2. As can be seen in FIGS. 5 and 6, the HAZ 112 contributes to an uneven and/or rough profile of the CFRP skin 110 surrounding and forming the hole 108. Additionally, laser formation of the hole 108 using conventional practices may cause the hole 108 to be formed with an uneven diameter. For example, the inlet diameter D1 of FIG. 6 is greater than the outlet diameter D2 of FIG. 6.

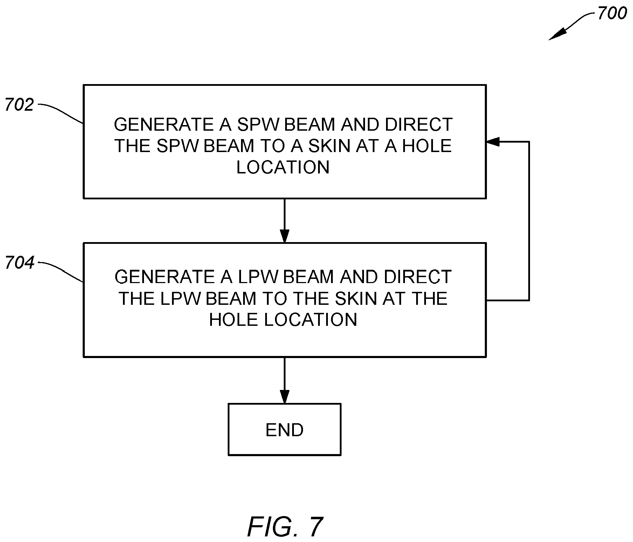

Referring to FIGS. 3 and 7, a Method 700 for forming holes for an acoustic panel front skin using a laser perforating system is provided. FIG. 7 illustrates a flowchart for the Method 700. The Method 700 is described herein with respect to the acoustic panel 26 and the laser perforating system 86. The controller 90 may be used to execute or control one or more steps of the Method 700. For example, the processor 102 may execute instructions stored in memory 104, thereby causing the controller 90 and/or its processor 102 to execute or otherwise control one or more steps of the Method 700. However, it should be understood that the Method 700 is not limited to use with the acoustic panel 26 or the laser perforating system 86 described herein. Unless otherwise noted herein, it should be understood that the steps of Method 700 are not required to be performed in the specific sequence in which they are discussed below and, in some embodiments, the steps of Method 700 may be performed separately or simultaneously.

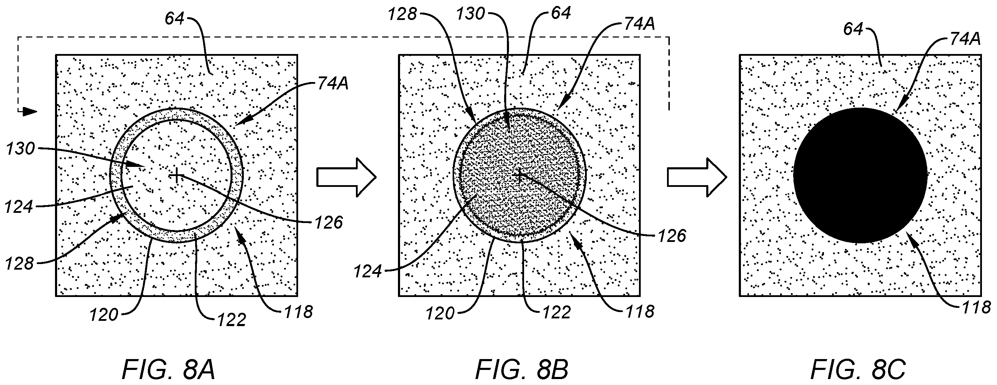

FIGS. 8A-C illustrate a series of sequential formation stages of one of the holes 74 (hereinafter hole 74A; see FIG. 2) of the front skin 64 in accordance with the Method 700. The front skin 64 of FIGS. 8A and 8B includes a hole location 118. The hole location 118 is representative of a portion of the skin material of the front skin 64 to be removed (e.g., ablated by the laser beam 96) to form the hole 74A. The hole location 118 includes a perimeter 120, a perimeter hole portion 122, and a center hole portion 124 for the hole 74A. The perimeter 120 extends about (e.g., completely around) an axial centerline 126 of the hole 74A. The perimeter 120 of FIGS. 8A and 8B is illustrated as a circle, however, the holes 74 of the present disclosure are not limited to having a circular shape. The perimeter hole portion 122 is disposed coincident with the perimeter 120. The perimeter hole portion 122 may extend about (e.g., completely around) the axial centerline 126 coincident with the perimeter 120. The perimeter hole portion 122 surrounds the center hole portion 124. For example, the perimeter hole portion 122 may extend about (e.g., completely around) the center hole portion 124. The center hole portion 124 is disposed coincident with the axial centerline 126. The center hole portion 124 is separated (e.g., radially separated) from the perimeter 120 by the perimeter hole portion 122. The perimeter hole portion 122 and the center hole portion 124 form a cross-sectional area of the hole location 118. The perimeter hole portion 122 forms a first area 128 of the cross-sectional area of the hole location 118 and the center hole portion 124 forms a second area 130 of the cross-sectional area of the hole location 118. As will be discussed in further detail, the first area 128 may be different than the second area 130. For example, the first area 128 may be less than the second area 130. For further example, the first area 128 may be less than or equal to 30 percent of the cross-sectional area of the hole location 118 and the second area 130 may be greater than or equal to 70 percent of the cross-sectional area of the hole location 118, or more preferably, the first area 128 may be less than or equal to 20 percent of the cross-sectional area of the hole location 118 and the second area 130 may be greater than or equal to 80 percent of the cross-sectional area of the hole location 118, or still more preferably, the first area 128 may be less than or equal to 10 percent of the cross-sectional area of the hole location 118 and the second area 130 may be greater than or equal to 00 percent of the cross-sectional area of the hole location 118.

In Step 702, the laser source 88 generates the laser beam 96 with a first pulse width (hereinafter the "short pulse width" (SPW) beam) and directs the SPW beam to the front skin 64 (e.g., the outer surface 70 or the inner surface 72) to form each of the holes 74 (e.g., the hole 74A of FIGS. 8A-C). The controller 90 may control the laser source 88 to generate the SPW beam and direct the SPW beam to the front skin 64. According to the present invention, in Step 702, the SPW beam is directed only to the perimeter hole portion 122. In other words, the SPW beam may not be directed to the center hole portion 124. The "SPW beam", as used herein, refers to the laser beam 96 having a pulse width which is less than 1 nanosecond. The laser source 88 additionally generates the SPW beam with a first light wavelength, which first light wavelength may be between approximately 400 nm and approximate 1100 nm.

In Step 704, the laser source 88 generates the laser beam 96 with a second pulse width (hereinafter the "long pulse width" (LPW) beam) and directs the LPW beam to the front skin 64 (e.g., the outer surface 70 or the inner surface 72) to form each of the holes 74 (e.g., the hole 74A of FIGS. 8A-C). The second pulse width of the LPW beam is greater than the first pulse width of the SPW beam. The controller 90 may control the laser source 88 to generate the LPW beam and direct the LPW beam to the front skin 64. FIG. 8B illustrates the hole location 118 having at least some skin material of the center hole portion 124 removed. According to the present invention, in Step 704, the LPW beam is directed only to the center hole portion 124. In other words, the LPW beam may not be directed to the perimeter hole portion 122. The "LPW beam", as used herein, refers to the laser beam 96 having a pulse width which is greater than the pulse width of the SPW beam. For example, the LPW beam may have a pulse width which is greater than 1 nanosecond. The laser source 88 additionally generates the LPW beam with a second wavelength, which second wavelength may be between approximately 400 nm and approximately 1100 nm. The second wavelength of the LPW beam may be the same as or substantially the same (i.e., the second wavelength may be between 90 percent and 110 percent of the first wavelength) as the first wavelength of the SPW beam. Alternatively, the first wavelength of the SPW beam and the second wavelength of the LPW beam may be different.

We have observed that the use of the SPW beam for ablating portions of the front skin 64 at (e.g., on, adjacent, or proximate) the perimeter 120 for each hole 74 (e.g., the perimeter hole portion 122) may prevent or reduce the severity of HAZ formation on the front skin 64 during the laser perforation process. Accordingly, the use of the SPW beam for ablating the perimeter hole portion 122 may facilitate improved structural characteristics of the front skin 64 as well as a smoother and straighter profile for the holes 74. For example, in contrast to the hole 108 of FIG. 6, the holes 74 formed in accordance with the present disclosure may have an inlet diameter and an outlet diameter which are the same or substantially the same. However, the use of the SPW beam for ablating the skin material of the front skin 64 may be slower than the use of the LPW beam (e.g., the LPW beam generally having a higher average power than the LPW beam) for ablating the skin material of the front skin 64. Accordingly, the LPW beam may be used for ablating the skin material center hole portion 124 which may represent the majority of the skin material to be ablated in the formation of each hole 74. A size of the perimeter hole portion 122 relative to the center hole portion 124 (e.g., a ratio of the first area 128 to the second area 130) may be selected to prevent or reduce the severity of HAZ formation while also minimizing the time required for formation of the holes 74. For example, to reduce hole formation time, the first area 128 for the perimeter hole portion 122 may be selected to be as low as necessary to suitably prevent or reduce the severity of HAZ formation. As previously discussed, the first area 128 for the perimeter hole portion 122 may be less than or equal to 30 percent of the cross-sectional area of the hole location 118 and the second area 130 for the center hole portion 124 may be greater than or equal to 70 percent of the cross-sectional area of the hole location 118, or more preferably, the first area 128 may be less than or equal to 20 percent of the cross-sectional area of the hole location 118 and the second area 130 may be greater than or equal to 80 percent of the cross-sectional area of the hole location 118, or still more preferably, the first area 128 may be less than or equal to 10 percent of the cross-sectional area of the hole location 118 and the second area 130 may be greater than or equal to 00 percent of the cross-sectional area of the hole location 118.. This ratio of the first area 128 to the second area 130 may provide a suitable distance between the LPW beam and portions of the front skin 64 at (e.g., on, adjacent, or proximate) the perimeter 120 while still allowing the majority of the skin material for each of the holes 74 to be more quickly removed using the LPW beam. However, the relative sizes (e.g., areas) of the perimeter hole portion 122 and the center hole portion 124 may depend on a number of factors such as, but not limited to, a size (e.g., diameter) of the holes, the configuration of the skin material, and/or the laser beam 96 parameters (e.g., pulse width, wavelength, etc.). The present disclosure may additionally include generating the SPW beam and/or the LPW beam with a relatively low light wavelength in comparison to at least some other conventional laser perforating systems and methods of which we are aware. The use of a lower light wavelength for the SPW beam and/or the LPW beam may additionally prevent or reduce the severity of HAZ formation on the front skin 64.

The Steps 702 and 704 may be iteratively performed to form each of the holes 74. For example, the controller 90 may control the laser source 88 to generate and direct the SPW beam to the perimeter hole portion 122 to ablate a portion of the skin material of the perimeter hole portion 122, controller the laser source 88 to generate and direct the LPW beam to the center hole portion 124 to ablate a portion of the skin material of the center hole portion 122, control the laser source 88 to generate and direct the SPW beam to the perimeter hole portion 122 to ablate a portion of the skin material of the perimeter hole portion 122, etc. until the hole 74A is completely formed through the front skin 64 as shown, for example, in FIG. 8C.

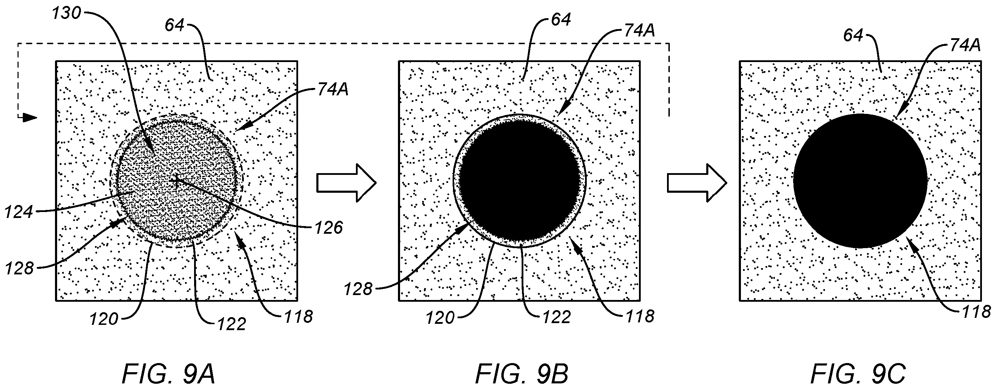

In some embodiments, the steps of the Method 700 may be performed in an alternative order. FIGS. 9A-C illustrate a series of sequential formation stages of the hole 74A. The controller 90 may control the laser source 88 to generate the LPW beam and direct the LPW beam to the center hole portion 124 to ablate all or substantially all of the skin material of the center hole portion 124 (see Step 704). FIG. 9A illustrates the hole location 118 with a portion (e.g., a depth) of the skin material of the center hole portion 124 ablated. FIG. 9B illustrates the hole location 118 with all or substantially all of the skin material of the center hole portion 124 ablated. The controller 90 may then control the laser source 88 to generate the SPW beam and direct the SPW beam to the perimeter hole portion 122 to ablate all or substantially all of the skin material of the perimeter hole portion 122. FIG. 9C illustrates the hole 74A completely formed through the front skin 64. Alternatively, the steps of directing the LPW beam to the center hole portion 124 and directing the SPW beam to the perimeter hole portion 122 may be iteratively performed, as discussed above, until the hole 74A is completely formed through the front skin 64.

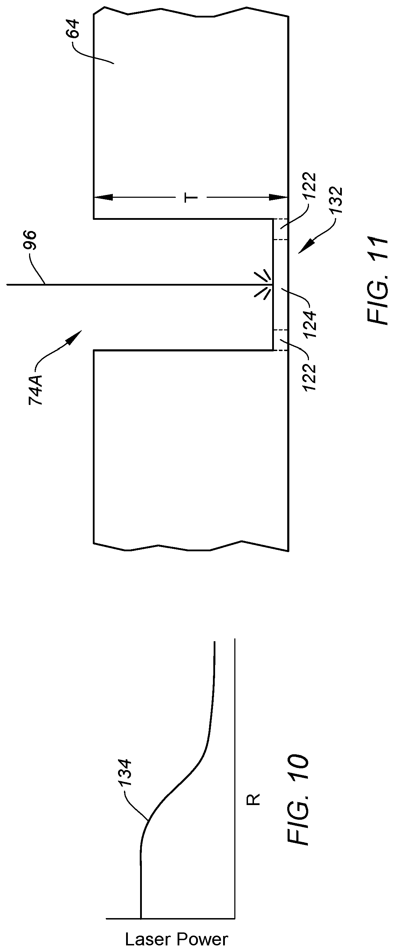

In some embodiments, the controller 90 may control the laser source 88 to control a laser power of the laser beam 96 (e.g., the SPW beam and/or the LPW beam) based on a radial distance of the laser beam 96 from the axial centerline 126. FIG. 10 illustrates an exemplary graph of laser power vs. radial distance R for the laser beam 96. As shown in FIG. 10, the controller 90 may control the laser source 88 to decrease a laser power 134 of the laser beam 96 as the radial distance R from the axial centerline 126 increases. In other words, the controller 90 may control the laser source 88 to decrease the laser power 134 of the laser beam 96 as the laser beam 96 is directed increasingly closer to the perimeter 120. Decreasing the laser power 134 of the laser beam 96 as the radial distance R from the axial centerline 126 increases may facilitate the use of a smaller perimeter hole portion 122 (e.g., relative to the center hole portion 124) while also preventing or reducing severity of HAZ formation in the front skin 64. The laser source 88 may control the laser power 134 of the laser beam 96, for example, by controlling the wavelength of the laser beam 96.

In some embodiments, the controller 90 may control the laser source 88 to generate the SPW beam and direct the SPW beam to the perimeter hole portion 122 and the center hole portion 124 to finish formation of each of the holes 74 (e.g., the hole 74A) through the front skin 64. FIG. 11 shows an intermediate stage of formation of the hole 74A in which a final portion 132 of the skin material of the perimeter hole portion 122 and the center hole portion 124 has not yet been ablated by the laser beam 96. The controller 90 may control the laser source 88 to direct the SPW beam to ablate the final portion 132 of the skin material of the perimeter hole portion 122 and the center hole portion 124. The final portion 132 of the skin material may include the skin material of a portion of a thickness T of the front skin 64. For example, the final portion 132 may be less than 10 percent of the thickness T. The controller 90 may control the laser source 88 to ablate the skin material (e.g., all the skin material) of the final portion 132 of the skin material of the perimeter hole portion 122 and the center hole portion 124 using the SPW beam. Laser perforation of the front skin 64 (e.g., in accordance with the Method 700) may include using the laser perforating system 86 to form the holes 74 with the front skin 64, the back skin 66, and the core 68 of the acoustic panel 26 in an assembled condition as shown, for example, in FIG. 3. Use of the laser beam 96 to ablate the final portion 132 of the skin material of the front skin 64 to form the holes 74 may, in some cases, result in the laser beam 96 passing through the front skin 64 (e.g., through the holes 74). After passing through the front skin 64, the laser beam 96 may interact with a downstream component such as the back skin 66 and/or the core 68. This phenomenon may be referred to as laser "back striking." Back striking of the back skin 66 and/or the core 68 by the laser beam 96 may cause damage or degradation of the back skin 66 and/or the core 68, particularly where the laser beam 96 may be the LPW beam. Use of the SPW beam to ablate the final portion 132 of the skin material of the perimeter hole portion 122 and the center hole portion 124 may prevent or reduce the likelihood of damage or degradation of the core and/or the back skin as a result of laser back striking.

While the principles of the present invention have been described above in connection with specific apparatuses and methods, it is to be clearly understood that this description is made only by way of example and not as limitation on the scope of the present invention, which is defined in the appended claims.

No element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A laser perforating system (86) comprising:
at least one laser source (88); and
the laser perforating system (86) being **characterised by**:
a controller (90) including a processor (102) in communication with a non-transitory memory (104) storing instructions, which instructions when executed by the processor (102), cause the processor (102) to:
control the at least one laser source (88) to form a hole (108) in a skin (110) by:
generating a short pulse width (SPW) beam with the at least one laser source (88) and directing the SPW beam to the skin (110) at a hole location (118) for the hole (108); and
generating a long pulse width (LPW) beam with the at least one laser source (88) and directing the LPW beam to the skin (110) at the hole location (118),
wherein the LPW beam refers to a laser beam having a pulse width which is greater than the pulse width of the SPW beam;
wherein the hole location (118) includes a perimeter hole portion (122) and a center hole portion (124), and wherein the instructions, when executed by the processor (102), cause the processor (102) to control the at least one laser source (88) to form the hole (108) in the skin (110) by generating the SPW beam with the at least one laser source (88) and directing the SPW beam to the skin (110) only at the perimeter hole portion (122) and generating the LPW beam with the at least one laser source (88) and directing the LPW beam to the skin (110) only at the center hole portion (124).

2. The laser perforating system (86) of claim 1, wherein the instructions, when executed by the processor (102), cause the processor (102) to control the at least one laser source (88) to form the hole (108) in the skin (110) by iteratively performing the steps of generating the SPW beam with the at least one laser source (88) and directing the SPW beam to the skin (110) at the hole location (118) and generating the LPW beam with the at least one laser source (88) and directing the LPW beam to the skin (110) at the hole location (118).

3. The laser perforating system (86) of claim 1 or 2, wherein the perimeter hole portion (122) surrounds the center hole portion (124).

4. The laser perforating system (86) of claim 1, wherein the perimeter hole portion (122) includes less than or equal to 30 percent of an area of the hole location (118) and the center hole portion (124) includes greater than or equal to 70 percent of the area of the hole location (118).

5. The laser perforating system (86) of any preceding claim, wherein the instructions, when executed by the processor (102), further cause the processor (102) to control the at least one laser source to form the hole (108) in the skin (110) by generating the SPW beam with the at least one laser source (64) and directing the SPW beam to the skin (110) at the perimeter hole portion (122) and the center hole portion (124) to ablate a final portion of a skin material at the hole location (118).

6. The laser perforating system (86) of any preceding claim, wherein the hole location (118) includes an axial centerline (126) for the hole (108), and wherein the instructions, when executed by the processor (102), cause the processor (102) to control the at least one laser source (88) to reduce a laser power of the LPW beam as a radial distance of the LPW beam from the axial centerline (126) increases.

7. The laser perforating system (86) of any preceding claim, wherein the SPW beam and the LPW beam have a light wavelength between 400 nanometers and 1100 nanometers.

8. The laser perforating system (86) of any preceding claim, wherein the at least one laser source (88) includes a first laser source, and the first laser source is configured to generate the SPW beam and the LPW beam.

9. The laser perforating system (86) of any of claims 1 to 7, wherein the at least one laser source (88) includes a first laser source and a second laser source, the first laser source is configured to generate the SPW beam, and the second laser source is configured to generate the LPW beam.

10. A method for forming a plurality of holes (74) in a front skin (64) for an acoustic panel (26), the method being **characterised by**:
forming each hole of the plurality of holes (74) by:
generating a short pulse width (SPW) beam and directing the SPW beam to the front skin (64) at only a first portion of a hole location (118) for each hole of the plurality of holes (74); and
generating a long pulse width (LPW) beam and directing the LPW beam to the front skin (64) at only a second portion of the hole location (118) for each hole of the plurality of holes (74), the first portion different than the second portion,
wherein the LPW beam refers to a laser beam having a pulse width which is greater than the pulse width of the SPW beam;
wherein the first portion is disposed coincident with a perimeter (120) of the hole location (118) for each hole of the plurality of holes (74).

11. The method of claim 10, wherein the first portion includes a first area (128), the second portion includes a second area (130), and the second area (130) is greater than the first area (128).

12. The method of claim 10 or 11, wherein the acoustic panel (26) includes the front skin (64), a back skin (66), and a core (68), and forming each hole of the plurality of holes (74) is performed with the core (68) mounted to and between the front skin (64) and the back skin (66).

13. The method of any of claims 10 to 12, wherein forming each hole of the plurality of holes (74) further includes generating the short pulse width (SPW) beam and directing the SPW beam to the front skin (64) at the first portion and the second portion to ablate a final portion (132) of a skin material of the front skin (64) at the hole location (118).

14. The method of any of claims 10 to 13, wherein the front skin (64) is formed by a skin material, and the skin material includes a carbon fiber-reinforced plastic.

15. The method of any of claims 10 to 14, wherein:
the SPW beam has a first light wavelength within a green range of visible light; and
the LPW beam has a second light wavelength within the green range of visible light.

## Patentansprüche

1. Laserperforiersystem (86), umfassend:
mindestens eine Laserquelle (88); und
wobei das Laserperforiersystem (86) **gekennzeichnet ist durch**:
eine Steuerung (90), die einen Prozessor (102) beinhaltet, der in Verbindung mit einem nichtflüchtigen Speicher (104) steht, der Anweisungen speichert, wobei die Anweisungen, wenn sie vom Prozessor ausgeführt (102) werden, den Prozessor (102) zu Folgendem veranlassen:
Steuern der mindestens eine Laserquelle (88), um ein Loch (108) in einer Haut (110) auszubilden, **durch**:
Erzeugen eines Strahls mit kurzer Pulsbreite (SPW) mit der mindestens einen Laserquelle (88) und Richten des SPW-Strahls auf die Haut (110) an einer Lochstelle (118) für das Loch (108); und
Erzeugen eines Strahls mit langer Pulsbreite (LPW) mit der mindestens einen Laserquelle (88) und Richten des LPW-Strahls auf die Haut (110) an der Lochstelle (118),
wobei sich der LPW-Strahl auf einen Laserstrahl bezieht, der eine Pulsbreite aufweist, die größer ist als die Pulsbreite des SPW-Strahls;
wobei die Lochstelle (118) einen Umfangslochabschnitt (122) und einen mittleren Lochabschnitt (124) beinhaltet, und wobei die Anweisungen, wenn sie vom Prozessor (102) ausgeführt werden, den Prozessor (102) veranlassen, die mindestens eine Laserquelle (88) zu steuern, um das Loch (108) in der Haut (110) **durch** Erzeugen des SPW-Strahls mit der mindestens einen Laserquelle (88) und Richten des SPW-Strahls auf die Haut (110) nur am Umfangslochabschnitt (122) und Erzeugen des LPW-Strahls mit der mindestens einen Laserquelle (88) und Richten des LPW-Strahls auf die Haut (110) nur am mittleren Lochabschnitt (124) auszubilden.

2. Laserperforiersystem (86) nach Anspruch 1, wobei die Anweisungen, wenn sie vom Prozessor (102) ausgeführt werden, den Prozessor (102) veranlassen, die mindestens eine Laserquelle (88) zu steuern, um das Loch (108) in der Haut (110) durch iteratives Durchführen der folgenden Schritte auszubilden: Erzeugen des SPW-Strahls mit der mindestens einen Laserquelle (88) und Richten des SPW-Strahls auf die Haut (110) an der Lochstelle (118) und Erzeugen des LPW-Strahls mit der mindestens einen Laserquelle (88) und Richten des LPW-Strahls auf die Haut (110) an der Lochstelle (118).

3. Laserperforiersystem (86) nach Anspruch 1 oder 2, wobei der Umfangslochabschnitt (122) den mittleren Lochabschnitt (124) umgibt.

4. Laserperforiersystem (86) nach Anspruch 1, wobei der Umfangslochabschnitt (122) weniger als oder gleich 30 Prozent einer Fläche der Lochstelle (118) beinhaltet und der mittlere Lochabschnitt (124) mehr als oder gleich 70 Prozent der Fläche der Lochstelle (118) beinhaltet.

5. Laserperforiersystem (86) nach einem der vorhergehenden Ansprüche, wobei die Anweisungen, wenn sie vom Prozessor (102) ausgeführt werden, den Prozessor (102) ferner veranlassen, die mindestens eine Laserquelle zu steuern, um das Loch (108) in der Haut (110) durch Erzeugen des SPW-Strahls mit der mindestens einen Laserquelle (64) und Richten des SPW-Strahls auf die Haut (110) am Umfangslochabschnitt (122) und am mittleren Lochabschnitt (124), um einen letzten Abschnitt eines Hautmaterials an der Lochstelle (118) abzutragen, auszubilden.

6. Laserperforiersystem (86) nach einem der vorhergehenden Ansprüche, wobei die Lochstelle (118) eine axiale Mittellinie (126) für das Loch (108) beinhaltet, und wobei die Anweisungen, wenn sie vom Prozessor (102) ausgeführt werden, den Prozessor (102) veranlassen, die mindestens eine Laserquelle (88) zu steuern, um eine Laserleistung des LPW-Strahls zu reduzieren, wenn ein radialer Abstand des LPW-Strahls von der axialen Mittellinie (126) zunimmt.

7. Laserperforiersystem (86) nach einem der vorhergehenden Ansprüche, wobei der SPW-Strahl und der LPW-Strahl eine Lichtwellenlänge zwischen 400 Nanometern und 1100 Nanometern aufweisen.

8. Laserperforiersystem (86) nach einem der vorhergehenden Ansprüche, wobei die mindestens eine Laserquelle (88) eine erste Laserquelle beinhaltet und die erste Laserquelle dazu konfiguriert ist, den SPW-Strahl und den LPW-Strahl zu erzeugen.

9. Laserperforiersystem (86) nach einem der Ansprüche 1 bis 7, wobei die mindestens eine Laserquelle (88) eine erste Laserquelle und eine zweite Laserquelle beinhaltet, wobei die erste Laserquelle dazu konfiguriert ist, den SPW-Strahl zu erzeugen, und die zweite Laserquelle dazu konfiguriert ist, den LPW-Strahl zu erzeugen.

10. Verfahren zum Ausbilden einer Vielzahl von Löchern (74) in einer vorderen Haut (64) für eine Akustikplatte (26), wobei das Verfahren **gekennzeichnet ist durch**:
Ausbilden jedes Lochs der Vielzahl von Löchern (74) **durch**:
Erzeugen eines Strahls mit kurzer Pulsbreite (SPW) und Richten des SPW-Strahls auf die vordere Haut (64) an nur einem ersten Abschnitt einer Lochstelle (118) für jedes Loch der Vielzahl von Löchern (74); und
Erzeugen eines Strahls mit langer Pulsbreite (LPW) und Richten des LPW-Strahls auf die vordere Haut (64) an nur einem zweiten Abschnitt der Lochstelle (118) für jedes Loch der Vielzahl von Löchern (74), wobei sich der erste Abschnitt vom zweiten Abschnitt unterscheidet,
wobei sich der LPW-Strahl auf einen Laserstrahl bezieht, der eine Pulsbreite aufweist, die größer ist als die Pulsbreite des SPW-Strahls;
wobei der erste Abschnitt übereinstimmend mit einem Umfang (120) der Lochstelle (118) für jedes Loch der Vielzahl von Löchern (74) angeordnet ist.

11. Verfahren nach Anspruch 10, wobei der erste Abschnitt eine erste Fläche (128) beinhaltet und der zweite Abschnitt eine zweite Fläche (130) beinhaltet, wobei die zweite Fläche (130) größer als die erste Fläche (128) ist.

12. Verfahren nach Anspruch 10 oder 11, wobei die Akustikplatte (26) die vordere Haut (64), eine hintere Haut (66) und einen Kern (68) beinhaltet, und das Ausbilden jedes Lochs der Vielzahl von Löchern (74) mit dem Kern (68) durchgeführt wird, der an und zwischen der vorderen Haut (64) und der hinteren Haut (66) angebracht ist.

13. Verfahren nach einem der Ansprüche 10 bis 12, wobei das Ausbilden jedes Lochs der Vielzahl von Löchern (74) ferner Erzeugen des Strahls mit kurzer Pulsbreite (SPW) und Richten des SPW-Strahls auf die vordere Haut (64) am ersten Abschnitt und am zweiten Abschnitt beinhaltet, um einen letzten Abschnitt (132) eines Hautmaterials der vorderen Haut (64) an der Lochstelle (118) abzutragen.

14. Verfahren nach einem der Ansprüche 10 bis 13, wobei die vordere Haut (64) durch ein Hautmaterial ausgebildet wird und das Hautmaterial einen kohlenstofffaserverstärkten Kunststoff beinhaltet.

15. Verfahren nach einem der Ansprüche 10 bis 14, wobei:
der SPW-Strahl eine erste Lichtwellenlänge im grünen Bereich des sichtbaren Lichts aufweist; und
der LPW-Strahl eine zweite Lichtwellenlänge im grünen Bereich des sichtbaren Lichts aufweist.

## Revendications

1. Système de perforation laser (86) comprenant :
au moins une source laser (88) ; et
le système de perforation laser (86) étant **caractérisé par** :
un dispositif de commande (90) comportant un processeur (102) en communication avec une mémoire non transitoire (104) stockant des instructions, lesquelles instructions, lorsqu'elles sont exécutées par le processeur (102), amènent le processeur (102) à :
commander la au moins une source laser (88) pour former un trou (108) dans une peau (110) par :
la génération d'un faisceau à impulsion courte (SPW) au moyen de la au moins une source laser (88) et la direction du faisceau SPW vers la peau (110) à un emplacement de trou (118) pour le trou (108) ; et
la génération d'un faisceau à impulsion longue (LPW) au moyen de la au moins une source laser (88) et la direction du faisceau LPW vers la peau (110) à l'emplacement de trou (118),
dans lequel le faisceau LPW désigne un faisceau laser présentant une largeur d'impulsion qui est supérieure à la largeur d'impulsion du faisceau SPW ;
dans lequel l'emplacement de trou (118) comprend une partie de trou périphérique (122) et une partie de trou centrale (124), et dans lequel les instructions, lorsqu'elles sont exécutées par le processeur (102), amènent le processeur (102) à commander la au moins une source laser (88) pour former le trou (108) dans la peau (110) en générant le faisceau SPW au moyen de la au moins une source laser (88) et en dirigeant le faisceau SPW vers la peau (110) uniquement au niveau de la partie de trou périphérique (122) et en générant le faisceau LPW au moyen de la au moins une source laser (88) et en dirigeant le faisceau LPW vers la peau (110) uniquement au niveau de la partie de trou centrale (124).

2. Système de perforation laser (86) selon la revendication 1, dans lequel les instructions, lorsqu'elles sont exécutées par le processeur (102), amènent le processeur (102) à commander la au moins une source laser (88) pour former le trou (108) dans la peau (110) en effectuant itérativement les étapes de génération du faisceau SPW au moyen de la au moins une source laser (88) et de direction du faisceau SPW vers la peau (110) au niveau de l'emplacement de trou (118), et de génération du faisceau LPW au moyen de la au moins une source laser (88) et de direction du faisceau LPW vers la peau (110) au niveau de l'emplacement de trou (118).

3. Système de perforation laser (86) selon la revendication 1 ou 2, dans lequel la partie de trou périphérique (122) entoure la partie de trou centrale (124).

4. Système de perforation laser (86) selon la revendication 1, dans lequel la partie de trou périphérique (122) comprend une surface inférieure ou égale à 30 % de la surface de l'emplacement de trou (118) et la partie de trou centrale (124) comprend une surface supérieure ou égale à 70 % de la surface de l'emplacement de trou (118).

5. Système de perforation laser (86) selon l'une quelconque des revendications précédentes, dans lequel les instructions, lorsqu'elles sont exécutées par le processeur (102), amènent en outre le processeur (102) à commander la au moins une source laser pour former le trou (108) dans la peau (110) en générant le faisceau SPW au moyen de la au moins une source laser (64) et en dirigeant le faisceau SPW vers la peau (110) au niveau de la partie de trou périphérique (122) et au niveau de la partie de trou centrale (124) pour ablater une parie finale d'un matériau de peau au niveau de l'emplacement de trou (118).

6. Système de perforation laser (86) selon l'une quelconque des revendications précédentes, dans lequel l'emplacement de trou (118) comporte une ligne centrale axiale (126) pour le trou (108), et dans lequel les instructions, lorsqu'elles sont exécutées par le processeur (102), amènent le processeur (102) à commander la au moins une source laser (88) pour réduire la puissance laser du faisceau LPW à mesure qu'une distance radiale du faisceau LPW par rapport à la ligne centrale axiale (126) augmente.

7. Système de perforation laser (86) selon l'une quelconque des revendications précédentes, dans lequel le faisceau SPW et le faisceau LPW ont une longueur d'onde lumineuse comprise entre 400 nanomètres et 1100 nanomètres.

8. Système de perforation laser (86) selon l'une quelconque des revendications précédentes, dans lequel la au moins une sources laser (88) comporte une première source laser, et la première source laser est configurée pour générer le faisceau SPW et le faisceau LPW.

9. Système de perforation laser (86) selon l'une quelconque des revendications 1 à 7, dans lequel la au moins une sources laser (88) comporte une première source laser et une seconde source laser, la première source laser est configurée pour générer le faisceau SPW et la seconde source laser est configurée pour générer le faisceau LPW.

10. Procédé de formation d'une pluralité de trous (74) dans une peau avant (64) pour panneau acoustique (26), le procédé étant **caractérisé par** :
la formation de chaque trou de la pluralité de trous (74) par :
la génération d'un faisceau à impulsion courte (SPW) et la direction du faisceau SPW vers la peau avant (64) au niveau d'uniquement une première partie d'un emplacement de trou (118) pour chaque trou de la pluralité de trous (74) ; et
la génération d'un faisceau à impulsion longue (LPW) et la direction du faisceau LPW vers la peau avant (64) au niveau d'uniquement une seconde partie de l'emplacement de trou (118) pour chaque trou de la pluralité de trous (74), la première partie étant différente de la seconde partie,
dans lequel le faisceau LPW désigne un faisceau laser présentant une largeur d'impulsion qui est supérieure à la largeur d'impulsion du faisceau SPW ;
dans lequel la première partie est disposée de manière coïncidente avec un périmètre (120) de l'emplacement de trou (118) pour chaque trou de la pluralité de trous (74).

11. Procédé selon la revendication 10, dans lequel la première partie comporte une première surface (128), la seconde partie comporte une seconde surface (130), et la seconde surface (130) est supérieure à la première surface (128).

12. Procédé selon la revendication 10 ou 11, dans lequel le panneau acoustique (26) comporte la peau avant (64), une peau arrière (66) et un noyau (68), et la formation de chaque trou de la pluralité de trous (74) est réalisée avec le noyau (68) monté sur et entre la peau avant (64) et la peau arrière (66).

13. Procédé selon l'une quelconque des revendications 10 à 12, dans lequel la formation de chaque trou de la pluralité de trous (74) comporte en outre la génération du faisceau à impulsion courte (SPW) et la direction du faisceau SPW vers la peau avant (64) au niveau de la première partie et de la seconde partie pour ablater une partie finale (132) d'un matériau de peau de la peau avant (64) à l'emplacement du trou (118).

14. Procédé selon l'une quelconque des revendications 10 à 13, dans lequel la peau avant (64) est formée par un matériau de peau, et le matériau de peau comporte une matière plastique renforcée de fibres de carbone.

15. Procédé selon l'une quelconque des revendications 10 à 14, dans lequel :
le faisceau SPW présente une première longueur d'onde lumineuse située dans la gamme verte de la lumière visible ; et
le faisceau LPW présente une seconde longueur d'onde lumineuse située dans la gamme verte de la lumière visible.
